(19) Europäisches Patentamt
European Patent Office
Office européen des brevets

(11) **EP 1 283 496 A2**

(12) **EUROPÄISCHE PATENTANMELDUNG**

(43) Veröffentlichungstag:
**12.02.2003 Patentblatt 2003/07**

(51) Int Cl.⁷: **G06N 3/08**

(21) Anmeldenummer: **02017593.1**

(22) Anmeldetag: **07.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **11.08.2001 DE 10139682**

(71) Anmelder: **deneg GmbH**
**28211 Bremen (DE)**

(72) Erfinder: **Döding, Gerhard, Dr.**
**28844 Weyhe (DE)**

(74) Vertreter: **Gerstein, Hans Joachim, Dipl.-Ing. et al**
**Gramm, Lins & Partner**
**Theodor-Heuss-Strasse 1**
**38122 Braunschweig (DE)**

(54) **Verfahren zum Generieren von neuronalen Netzen**

(57)     Ein Verfahren zum Generieren von neuronalen Netzen mit gewichteten Netzknoten (N) und Verbindungen zwischen den Netzknoten (N), wobei die Netzknoten (N) in Netzschichten organisiert sind, hat die Schritte:

a) Definieren eines neuronalen Netzes mit einer minimalen Anzahl von Netzknoten (N) und Netzschichten für eine festgelegte Anzahl von Eingangs- und Ausgangsknoten;

b) Trainieren des definierten Netzes;

c) Hinzufügen von mindestens einem Netzknoten (N) und Wiederholen der Schritte b) und c) so lange, bis der Vorhersagefehler (F) des trainierten Netzes einem Fehlergrenzwert ($F_{max}$) entspricht oder den Fehlergrenzwert ($F_{max}$) unterschreitet, oder bis die Anzahl der Netzknoten (N) ein Netzknotenmaximum ($F_{max}$) erreicht, wobei nach dem Hinzufügen mindestens eines Netzknotens N für das weitere Trainieren des Netzes im Schritt b) der jeweils hinzgefügten Netzknoten (N) ausgehend von einem neutralen Wert mit einem während einer Trainingsphase stetig steigenden Einflussfaktor nachgeführt wird und die Gewichte (W) der übrigen Netzknoten (N) ausgehend von den jeweiligen Gewichten (W) aus der vorhergehenden Trainingsphase weiter trainiert werden.

Fig. 1

EP 1 283 496 A2

**Beschreibung**

Die Erfindung betrifft ein Verfahren zum Generieren von neuronalen Netzen mit gewichteten Netzknoten und Verbindungen zwischen den Netzknoten, wobei die Netzknoten in den Netzschichten organisiert sind.

Neuronale Netze sind grundsätzlich hinreichend bekannt und werden zur Lösung von Optimierungsaufgaben, in der künstlichen Intelligenz etc. eingesetzt. Entsprechend biologischer Nervennetze besteht ein neuronales Netz aus einer Vielzahl von gewichteten Netzknoten, die in Netzschichten organisiert und zusammengeschaltet sind. Die einzelnen Netzknoten werden in Abhängigkeit von ihren Eingangssignalen aktiviert und erzeugen ein entsprechendes Ausgangssignal. Die Aktivierung eines Netzknotens erfolgt über einen individuellen Gewichtsfaktor durch ein jeweiliges Eingangssignal.

Derartige neuronale Netze sind lernfähig, indem die Gewichtsfaktoren in Abhängigkeit von vorgegebenen beispielhaften Eingangs- und Ausgangswerten systematisch so lange verändert werden, bis das neuronale Netz in einem definierten Vohersagefehlerbereich ein gewünschtes Verhalten zeigt, wie z. B. die Vorhersage von Ausgabewerten für zukünftige Eingangswerte.

Damit weisen neuronale Netze adaptive Fähigkeiten zur Erlernung und Speicherung von Wissen und assoziative Fähigkeiten zum Vergleich von neuen Informationen mit gespeicherten Wissen auf.

Die Netzknoten, die auch analog zu dem biologischen Nervennetzen Neuronen genannt werden, können einen Ruhezustand oder einen Erregungszustand einnehmen. Jeder Netzknoten hat mehrere Eingänge und genau einen Ausgang, der mit den Eingängen anderer Netzknoten der nachfolgenden Netzschicht verbunden ist oder im Falle eines Ausgangsknoten einen entsprechenden Ausgangswert repräsentiert. Ein Netzknoten geht in den Erregungszustand über, wenn eine genügende Anzahl der Eingänge des Netzknotens über dem jeweiligen Schwellenwert des Netzknotens erregt sind.

In den Gewichten der Eingänge eines Netzknotens und in dem Schwellenwert des Netzknotens selbst ist das Wissen durch Adaption abgespeichert. In einem Lernvorgang werden die Gewichte eines neuronalen Netzes trainiert. Für dieses Training wird z. B. das grundsätzlich bekannte Backpropagation-Verfahren eingesetzt. Um für ein gegebenes Problem mit einer bekannten Anzahl von Eingangsund Ausgangsparametern ein neuronales Netz zu generieren, wird herkömmlicherweise durch wiederholte Versuche eine geeignete Netzstruktur mehr oder weniger zufällig gesucht. Sofern sich eine Netzstruktur nach einer Trainingsphase als nicht geeignet herausstellt, muss diese Netzstruktur geändert und neu trainiert werden, da sich das Netz beim Hinzufügen von Netzknoten grundsätzlich ändert und die bereits trainierten Werte ihre Gültigkeit verlieren.

Bei dieser herkömmlichen Methode der Generierung von neuronalen Netzen ist nicht sichergestellt, dass die zugrundegelegte Netzstruktur optimal ist. Zudem sind die Trainingsphasen sehr zeitaufwendig, da das Netz bei jeder Änderung vollständig neu trainiert werden muss.

Weiterhin sind Neuro-Fuzzy-Controller zum Beispiel aus Jörg Kahlert, und Hubert Frank: Fuzzy-Logik und Fuzzy-Control, zweite Aufl., Viehweg-Verlag Braunschweig, 1994, Seiten 268 bis 272 bekannt, bei denen die Eingänge der Netzknoten vor der Multiplikation mit den entsprechenden Gewichten fuzzifiziert werden. Hierbei wird der Eingangswert mit einem Paar von Fuzzy-Parametern multipliziert, die von der Größe des Eingangswertes abhängig sind. Die Fuzzy-Funktion kann z. B. eine Dreiecksfunktion, eine Min-Max-Funktion o. ä. sein. Auf diese Weise kann eine Unschärfe der Eingangswerte berücksichtigt werden.

Aufgabe der Erfindung war es, ein Verfahren zum Generieren von neuronalen Netzen zu schaffen, mit dem automatisch und schnell für eine festgelegte Anzahl von Eingangs- und Ausgangsparametern ein neuronales Netzwerk mit einer vorhersagbaren Qualität generiert werden kann.

Die Aufgabe wird durch das erfindungsgemäße Verfahren mit den Schritten gelöst von:

a) Definieren eines neuronalen Netzes mit einer minimalen Anzahl von Netzknoten und Netzschichten für eine festgelegte Anzahl von Eingangs- und Ausgangsknoten;

b) Trainieren des definierten Netzes;

c) Hinzufügen von mindestens einem Netzknoten und wiederholen der Schritte b) und c) so lange, bis der Vorhersagefehler des trainierten Netzes einem Fehlergrenzwert entspricht oder den Fehlergrenzwert unterschreitet, oder bis die Anzahl der Netzknoten ein Netzknotenmaximum erreicht, wobei nach dem Hinzufügen mindestens eines Netzknotens für das weitere Trainieren des Netzes im Schritt b) die jeweils hinzugefügten Netzknoten ausgehend von einem neutralen Wert mit einem während einer Trainingsphase stetig steigenden Einflussfaktor nachgeführt werden und die Gewichte der übrigen Netzknoten ausgehend von den jeweiligen Gewichten aus der vorhergehenden Trainingsphase weiter trainiert werden.

Ein optimales neuronales Netz wird somit erfindungsgemäß ausgehend von einem minimalen Netz durch selbstätiges Verändern der Netzstruktur generiert. Das nach Hinzufügen von mindestens einem Netzknoten geänderte Netz braucht jedoch nicht vollständig neu trainiert zu werden, da erfindungsgemäß die Gewichte der jeweils hinzugefügten Netzknoten zunächst neutral gehalten werden. Bei der Vorhersage wirken sich die hinzugefügten Netzknoten somit in den ersten Trainingsschritten nicht aus. Sie werden jedoch mittrainiert und mit einem stetig steigenden Einflussfaktor nachgeführt. Die hinzugefügten Netzknoten werden somit während einer Trainingsphase langsam aktiviert und stellen für das neuronale Netz lediglich eine Störung, aber keine Änderung dar. Auf diese Weise wird ein Lernverlust vermieden und es ist nicht mehr erforderlich, dass neuronale Netz vollständig neu zu trainieren.

Dadurch, dass das neuronale Netz immer von einem für die festgelegte Anzahl von Eingangs- und Ausgangsknoten eindeutig definierten Minimal-Netz generiert wird, ist eine Analyse des Systems zur Festlegung einer Netzstruktur nicht mehr erforderlich. Vielmehr wird durch das Verfahren die optimale Netzstruktur zuverlässig automatisch aufgefunden.

Die optimale Struktur wird insbesondere dann gefunden, wenn im Schritt c) jeweils nur ein einzelner Netzknoten hinzugefügt wird. Auf diese Weise wird sichergestellt, dass das neuronale Netz immer eine minimale Struktur hat und nicht überdimensioniert ist.

Überdimensionierte Netze haben den Nachteil, dass sie möglicherweise einen Prozess lediglich auswendig lernen und dann nicht mehr in der Lage sind, neue Zustände zuverlässig vorherzusagen. Die Netzknoten werden im Schritt c) daher nur so lange hinzugefügt, bis die Anzahl der Netzknoten ein Netzknotenmaximum erreicht hat. Ein weiteres Abbruchkriterium ist zudem das Erreichen einer geforderten Genauigkeit. Hierbei wird überprüft, ob der Vorhersagefehler des trainierten Netzes einem Fehlergrenzwert entspricht oder diesen unterschreitet. Dies kann auch beinhalten, dass der Vorhersagefehler durch Hinzufügen weiterer Netzknoten nicht mehr weiter reduziert werden kann.

Der Ort und die Netzschicht für den jeweils hinzugefügten Netzknoten wird vorzugsweise zufällig ausgewählt. Auf diese Weise kann ohne Analyse der Bildungsgesetze für die geforderte Netzstruktur generell ein optimales neuronales Netz generiert werden, ohne dass weitere Vorversuche erforderlich sind.

Die Einflussfaktoren zum Nachführen der hinzugefügten Netzknoten sind vorzugsweise durch eine Sigmoidfunktion ($f = (\frac{1}{1+e^{-x}})$) bestimmt. Jedoch können die Einflussfaktoren auch durch ähnliche Funktionen definiert werden, sofern hierdurch ein langsames Einschalten der hinzugefügten Netzknoten gewährleistet wird und sich die hinzugefügten Netzknoten lediglich als Störungen und nicht als Veränderung der Netzstruktur beim weiteren Training des Netzes auswirken.

Das Netzknotenmaximum als Abbruchkriterium für die Generierung des neuronalen Netzes ist vorzugsweise durch die maximale Anzahl von Netzknoten für die festgelegte Anzahl von Eingangs- und Ausgangsknoten eines nicht überbestimmten Netzes definiert. Die Berechnung des nächsten Netzknotenmaximums ist aus der Theorie der neuronalen Netze hinreichend bekannt.

Besonders vorteilhaft ist es, wenn eine Nichtlinearisierung des durch die Parameter an den Eingangs- und Ausgangsknoten festgelegten Systems durchgeführt wird. Durch eine solche künstliche Nichtlinearisierung wird die Konvergenz des Systems vergrößert, da der Suchraum für die optimale Lösung "glatt" gestaltet wird.

Die Erfindung wird nachfolgend anhand der beigefügten Zeichnungen näher erläutert. Es zeigen:

Figur 1 -    Blockdiagramm des erfindungsgemäßen Verfahrens zum Generieren von neuronalen Netzen;

Figur 2 -    Blockdiagramm der Trainingsroutine im zweiten Schritt b) des in der Figur 1 skizzierten Verfahrens;

Figur 3 -    Blockdiagramm des Verfahrens zur Modifizierung der Netzstruktur im Schritt c) des in der Figur 1 skizzierten Verfahrens;

Figur 4 -    Blockdiagramm für das langsame Einschalten von Netzknoten;

Figur 5 -    minimales neuronales Netz als Ausgangsnetz für zwei Eingangs- und einen Ausgangsknoten;

Figur 6 -    neuronales Netz aus Figur 2 mit einem hinzugefügten Netzknoten.

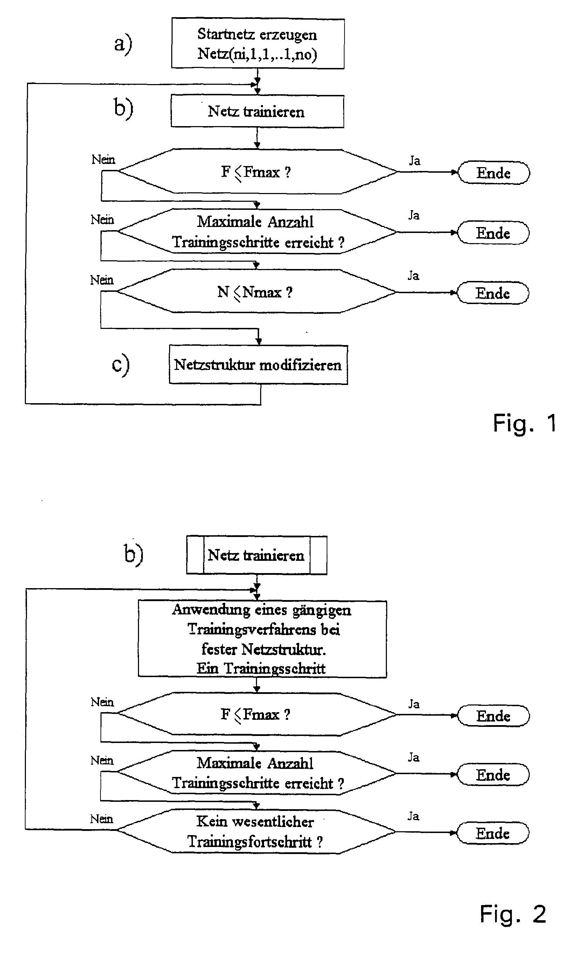

Die Figur 1 lässt ein Blockdiagramm des Verfahrens zum Generieren von neuronalen Netzen erkennen.

In einem ersten Schritt a) wird ein minimales neuronales Netz als Ausgangsnetz definiert, dass für eine festgelegte Anzahl von Eingangs- und Ausgangsknoten bzw. Eingangs- und Ausgangsparametern eine minimale Anzahl von Netzknoten N und Netzschichten aufweist. Dieses eindeutig definierte Minimal-Netz wird in einem zweiten Schritt b) in bekannter Weise zum Beispiel durch das Backpropagation-Verfahren wiederholt so lange einer Trainingsroutine unterzogen, bis eine gewünschte Genauigkeit erreicht ist, d. h. bis der Vorhersagefehler F des Netzes einen vorgegebenen Fehlergrenzwert $F_{max}$ entspricht oder diesen unterschreitet.

Sofern diese Bedingung erfüllt ist, wurde das optimale Netz generiert, das dann für die weitere Verwendung nutzbar ist.

Als zweites Ausstiegskriterium wird überprüft, ob die Anzahl der Netzknoten N ein Netzknotenmaximum $N_{max}$ erreicht hat. Das Netzknotenmaximum $N_{max}$ ist eindeutig durch die maximale Anzahl von Netzknoten N für die festgelegte Anzahl von Eingangs- und Ausgangsknoten eines nicht überbestimmten Netzes definiert. Auf diese Weise wird verhindert, dass das generierte neuronale Netz überdimensioniert ist.

Ein drittes Ausstiegskriterium ist das Erreichen einer maximalen Anzahl von durchgeführten Trainingsschritten.

Andernfalls wird die Netzstruktur im Schritt c) modifiziert, indem mindestens ein weiterer Netzknoten N, vorzugsweise jedoch nur ein einziger Netzknoten N dem Netzwerk an einem zufällig bestimmten Ort in einer zufällig bestimmten Netzschicht hinzugefügt wird. Die Gewichte des hinzugefügten Netzknotens N sind zunächst neutral, so dass die Vorhersage des Netzwerkes zunächst nicht beeinträchtigt wird. Mit diesem erweiterten Netzwerk wird anschließend der Schritt b) des Trainierens wiederholt. Die hinzugefügten Netzknoten N sind zunächst zwar in Vorwärtsrichtung zur Vorhersage neutral, jedoch in Rückwärtsrichtung für das Backpropagation-Verfahren zum Training vollständig aktiviert. Die hinzugefügten Netzknoten N nehmen daher bereits vollständig am weiteren Lernprozess teil. Im Verlaufe der Trainingsphase werden die hinzugefügten Netzknoten langsam, vorzugsweise mit einer Sigmoidfunktion nach der Gleichung $f(x) = (\frac{1}{1+e^{-x}})$ mit wachsenden Einfluss in das Netzwerk eingeschaltet. Die Variable x ist hierbei ein zum Schritt im Trainingsprozess bzw. der Zeit im Trainingsprozess proportionaler Wert. Im Unterschied zu Neuro-Fuzzy-Controllern wird die Eingangsgröße des jeweiligen Netzknotens N somit nicht abhängig von den Eingangsgrößen, sondern zeitabhängig von der Trainingsphase beeinflusst.

Auf die vorgenannte Weise wird das neuronale Netz so lange ergänzt und trainiert, bis ein Ausstiegskriterium erreicht ist. Durch die Ausstiegskriterien ist sichergestellt, dass das generierte Netz nicht überbestimmt und immer möglichst minimal ist. Dabei ist es nicht erforderlich, dass ergänzte Netz neu zu trainieren. Vielmehr wird der Trainingsprozess nach Hinzufügen eines weiteren Netzknotens N ausgehend von den Gewichten W der Netzknoten N am Ende der vorhergehenden Trainingsphase weitergeführt.

Die Figur 2 lässt die Trainingsroutine im Schritt b) des in der Figur 1 skizzierten Verfahrens erkennen, wobei unter Anwendung eines geeigneten und hinreichend bekannten Trainingsverfahrens bei der festgelegten Netzstruktur ein erster Trainingsschritt durchgeführt wird. Anschließend wird überprüft, ob eine definierte Genauigkeit des Netzes erreicht wurde, so dass gegebenenfalls die Trainingsroutine beendet wird. Sofern die gewünschte Genauigkeit des Netzes noch nicht erreicht wurde, wird überprüft, ob eine maximale Anzahl von Trainingsschritten erreicht wurde und gegebenenfalls die Trainingsroutine abgebrochen wird. Sofern die Anzahl der durchgeführten Trainingsschritte noch nicht maximal ist, wird überprüft, ob kein wesentlicher Trainingsfortschritt mehr zu beobachten ist. Sofern sich die Genauigkeit des Netzes nicht mehr in einem definierten Rahmen wesentlich erhöht, ist eine weitere Verbesserung des Netzes durch weiteres Training nicht mehr zu erwarten. Um zu vermeiden, dass sich die Netzqualität anschließend durch weitere Trainingsschritte wieder verschlechtert, wird dann die Trainingsroutine beendet.

Andernfalls wird ein neuer Trainingsschritt durchgeführt und die Abfrage wiederholt.

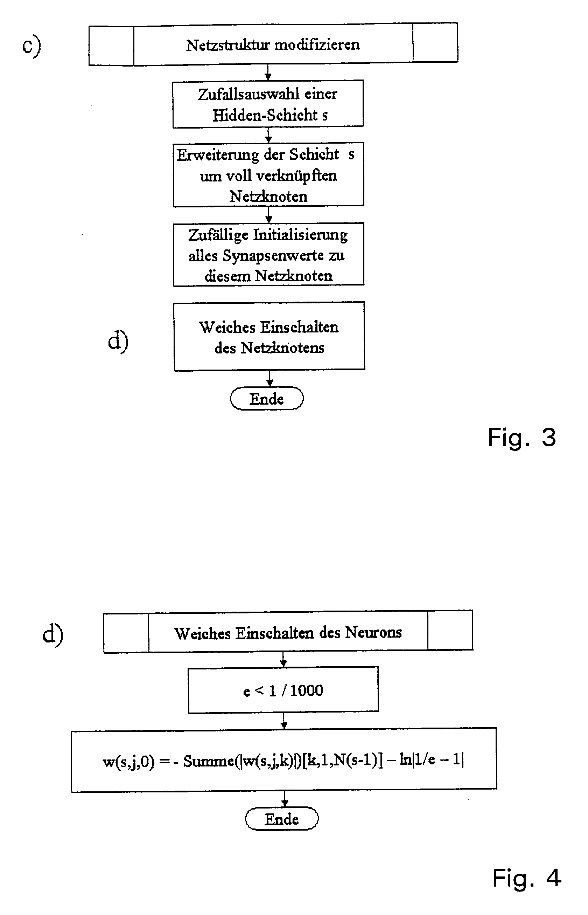

Die Figur 3 lässt das Verfahren zur Modifzierung der Netzstruktur im Schritt c) des in der Figur 1 skizzierten Verfahrens erkennen. Zunächst wird eine sogenannte Hidden-Netzschicht S zufällig ausgewählt. Hidden-Netzschichten S sind solche Netzschichten, die keine Eingangs- oder Ausgangs-Netzschichten sind. Die ausgewählte Hidden-Netzschicht S wird um ein vollständig mit den jeweils über- und untergeordneten Netzschichten S befindlichen Netzknoten N verknüpft. Die Synapsenwerte zu dem hinzugefügten Netzknoten werden zufällig initialisiert. Der hinzugefügte Netzknoten wird langsam eingeschaltet.

Das Verfahren zum langsamen Einschalten des hinzugefügten Netzknotens N ist in der Figur 4 als Blockschaltbild skizziert.

Ein Netzknoten ist bei voller Einbindung in das Netz ausgeschaltet und im Ausgang wirkungslos, wenn der Ausgabewert O(s,j) mit s=Schicht und j = Nummer des Netzknotens kleiner e und sehr viel kleiner als 1 ist (O(s,j) < e «1). Daraus folgt, dass die Sigmoidfunktion f (x) zum Einschalten des Netzknotens kleiner e ist

$$f(x) = (\frac{1}{1+e^{-x}}) < e \text{ und } x < \text{-ln } |1 / e\text{-}1|)$$

ist.

Für das synaptische Gewicht für die Verbindung des Netzknotens mit der Nummer j in der Netzschicht s mit dem hinzugefügten Netzknoten ergibt sich dann

$$w(s,j,0) < \text{- Summe } (|w(s,j,k)|)[k,1,N(s\text{-}1)]\text{-ln}|I/e\text{-}1|,$$

d. h. die Summe aller synaptischen Gewichte w(s,j,k) für k = 1 bis k = der Anzahl der Netzknoten in der übergeordneten Netzschicht s-1 abzüglich des Logarithmus des Betrages des Quotienten von 1 zu e-1.

Der Beitrag des hinzugeschalteten Netzknotens ist damit < e und somit für das trainierte Netz unschädlich. Da beim Training alle synaptischen Gewichte w verändert werden, also auch w (s,j,0), so schaltet sich der hinzugefügte Netzknoten automatisch während des Trainings weich gemäß der Sigmoidfunktion in die Berechnung des Netzes ein und nimmt am folgenden Training automatisch in immer stärker werdenem Maße teil.

Die maximale Netzkomplexität wird erreicht, wenn die Summenanzahl ($sumnw(i,o$-1)) aller synaptischen Gewichte zwischen der Eingangsnetzschicht i und der letzten Hidden-Netzschicht O-1 vor der Ausgangsnetzschicht O addiert mit dem Maximum ($Maxnw$ ($o$)) der Anzahl synaptischer Verbindungen zwischen den Netzknoten j der Ausgangsnetzschicht O ($K(o,j)$) und allen Neuronen der letzten Hidden-Netzschicht o-1 größer oder gleich der halben Anzahl Nt von Trainings-

daten ist:

$$Sumnw(i,o-1) + Maxnw(o) > =Nt/2.$$

Es ist vorteilhaft, die Eingangsdaten einer Nichtlinearisierung zu unterziehen, wodurch eine weniger hohe Netzkomplexität erreicht werden kann. Die Trainingsdaten mit der Nummer k, die an einen Netzknoten j in der Eingangsnetzschicht i angelegt werden, sind im folgenden mit $t(i,j,k)$ bezeichnet. Sie werden mit der Funktion $G(x)$ nichtlinearisiert, wobei die nichtlineare Funktion das Argument x auf dem Wertebereich $[-1,1]$ abbildet und die Funktion G mehrdeutig, nichtdifferenzierbar und unstetig sein darf. Beispiele für eine nichtlineare Funktion $(G(x))$ sind $a*sin(x)$, $a*cos(x)$, $exp(-a*x*x)$, $exp(-a*|x|)$, $tanh(x)$, $1/(1+e^{-x})$. Das Argument x sind die jeweiligen Trainingsdaten, so dass die nichtlinearisierten Trainingsdaten mit der Nummer k, die an den Netzknoten j in der Eingangsschicht i angelegt sind, durch die Funktion $G(T(i,j,k))$ beschrieben werden.

Die Netzkomplexität kann weiter verringert werden, indem die Dimensionalität des Eingangsdatenvektors erhöht wird. Hierzu wird ein Netzknoten $k(i,j)$ durch eine Anzahl m von Netzknoten $k(i,j+0)$ bis $k(i,j+m-1)$ ersetzt, so dass sich die Dimensionalität der Eingangsschicht um m-1 erhöht. Die neuen m Netzknoten der Eingangsnetzschicht i werden rezeptive Felder genannt, da sie nach der Funktion $R(n,G(T(i,j,k)))$ auf verschiedene Eigenschaften der ursprünglichen Eingangsdaten abgebildet werden. Die Funktion $R(n,G(T(i,j,k)))$ bezeichnet eine Anzahl m unterschiedlicher nicht identischer Abbildungen R derselben nichtlinearisierten Trainingsdaten $G(T(i,j,k))$ mit der Nummer k, die an den Netzknoten j in der Eingangsnetzschicht i angelegt sind. Der Index n durchläuft die ganzzahligen Werte 1 bis m.

Auf diese Weise kann sich das neuronale Netz in spezialisierte Teilnetze organisieren, was zu einer insgesamt niedrigeren Netzkomplexität führt.

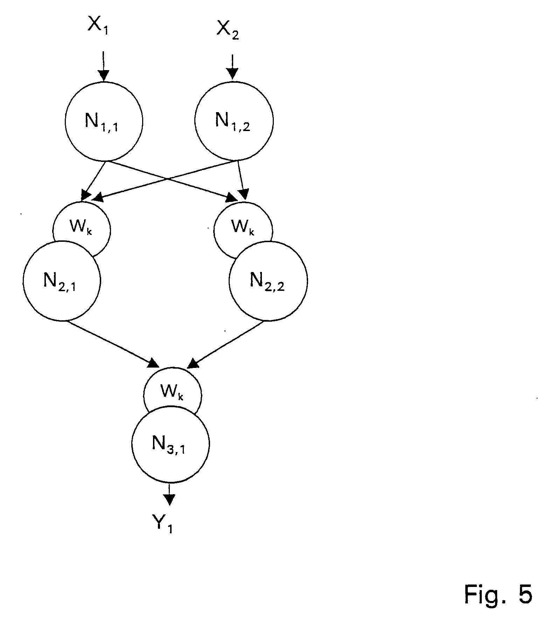

Die Figur 5 lässt eine schematische Darstellung eines Ausgangsnetzes mit einer für zwei Eingangsparameter $x_1$ und $x_2$ und einem Ausgangsparameter $y_1$ minimalen Anzahl von Netzknoten N i, j erkennen. Das Ausgangsnetz besteht hierbei aus i = 3 Netzschichten und einer Anzahl von j Netzknoten pro Netzschicht i (mit i, j als ganze Zahl).

Die Netzknoten $N_{1,1}$ und $N_{3,1}$ der ersten und letzten Netzschicht bilden die Eingangs- bzw. Ausgangsknoten für die Eingangswerte $x_1$, $x_2$ und Ausgangswerte $y_1$. Der Ausgang eines Netzknotens N ist mit den Eingängen der Netzknoten N der nachfolgenden Netzschicht verbunden. An den Eingängen der Netzknoten N sind jeweils Gewichte $W_K$ (mit Index k als ganze Zahl) vorgesehen, deren Werte in bekannter Weise z. B. durch das Backpropagation-Verfahren während einer Trainingsphase adaptiert werden. Während der Trainingsphase wird das neuronale Netz mit einer Reihe von Eingangswerten x beaufschlagt und die Ergebnisse am Ausgang des Netzes mit den für die Eingangswerte x bekannten korrekten Ausgangswerten y verglichen. Aus der Differenz der berechneten Ausgangswerte mit den korrekten Ausgangswerten y wird ein Vorhersagefehler F ermittelt, der maßgeblich in die Anpassung der Gewichte W einfließt.

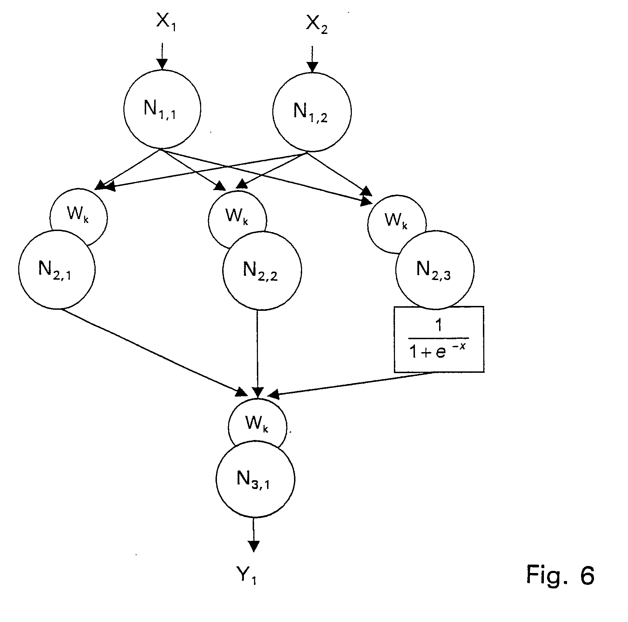

Das Training wird so lange durchgeführt, bis der Vorhersagefehler F einen festgelegten Fehlergrenzwert $F_{max}$ unterschreitet oder diesem entspricht oder der Vorhersagefehler F nicht mehr wesentlich weiter reduziert werden kann oder sogar wieder ansteigt. Sofern ein festgelegter Fehlergrenzwert $F_{max}$ unterschritten wird, wurde ein optimales Netz gefunden. Das Ausgangsnetz wird, wie in der Figur 6 skizziert, durch Hinzufügen eines weiteren Netzknotens N optimiert. Der zusätzliche Netzknoten N wird zufällig an einen beliebigen Ort und in einer beliebigen Netzschicht, jedoch nicht in der Eingangs- und Ausgangsnetzschicht eingefügt. Der hinzugefügte Netzknoten N beinhaltet eine Funktion, um den hinzugefügten Netzknoten N zunächst ohne Auswirkungen auf das Netz neutral und anschließend ausgehend von diesem neutralen Wert den Netzknoten N mit stetig steigendem Einflussfaktor nachzuführen. Als Funktion ist insbesondere eine Sigmoidfunktion, aber auch eine entsprechende von einem neutralen Ausgangswert stetig wachsende Funktion geeignet. Im Laufe der Trainingsphase steigt mit wachsendem Trainingsschritt x der Einflussfaktor z. B. nach der Sigmoidfunktion $f = (\frac{1}{1+e^{-x}})$. Die hinzugefügten Netzknoten N sind jedoch für die Lernphase in Rückwärtsrichtung vollständig aktiv, so dass das Backpropagation-Verfahren sich auch auf die neutralen Netzknoten N auswirkt.

Ein solches vorhergehend beschriebenes Verfahren zum Generieren von neuronalen Netzen kann vorteilhafterweise in ein Computerprogrammprodukt mit Programmcodemitteln in bekannter Weise implementiert und auf einem Computer bzw. entsprechender Recheneinrichtung ausgeführt werden. Das Verfahren kann für beliebige Probleme, insbesondere für die Vorhersage z. B. von Energiebedarf, Börsenkursen etc. eingesetzt werden, ohne dass es einer aufwendigen vorherigen Problemanalyse und Versuchsdurchführung bedarf. Vielmehr wird durch das Verfahren automatisch selbständig ein optimales Netz für die gegebene Anzahl von Eingangs- und Ausgangsknoten generiert.

**Patentansprüche**

1. Verfahren zum Generieren von neuronalen Netzen mit gewichteten Netzknoten (N) und Verbindungen zwischen den Netzknoten (N), wobei die Netzknoten (N) in Netzschichten (s) organisiert sind, **gekennzeichnet durch** die Schritte:

    a) Definieren eines neuronalen Netzes mit einer minimalen Anzahl von Netzknoten (N) und Netzschichten (s) für eine festgelegte Anzahl von Eingangs- und Ausgangsknoten;

b) Trainieren des definierten Netzes;

c) Hinzufügen von mindestens einem Netzknoten (N) und Wiederholen der Schritte b) und c) so lange, bis der Vorhersagefehler (F) des trainierten Netzes einem Fehlergrenzwert ($F_{max}$) entspricht oder den Fehlergrenzwert ($F_{max}$) unterschreitet, oder bis die Anzahl der Netzknoten (N) ein Netzknotenmaximum ($N_{max}$)erreicht,

wobei nach dem Hinzufügen mindestens eines Netzknotens (N) für das weitere Trainieren des Netzes im Schritt b) die jeweils hinzugefügten Netzknoten (N) ausgehend von einem neutralen Wert mit einem während einer Trainingsphase stetig steigenden Einflussfaktor nachgeführt werden und die Gewichte (W) der übrigen Netzknoten (N) ausgehend von den jeweiligen Gewichten (W) aus der vorhergehenden Trainingsphase weiter trainiert werden.

2. Verfahren nach Anspruch 1, **gekennzeichnet durch** zufälliges Auswählen des Ortes und der Netzschicht (s) für die jeweils hinzugefügten Netzknoten (N).

3. Verfahren nach Anspruch 1 oder 2, **dadurch gekennzeichnet, dass** die Einflussfaktoren zum Nachführen der hinzugefügten Netzknoten (N) durch eine Sigmoidfunktion bestimmt sind.

4. Verfahren nach einem der vorhergehenden Ansprüche, **dadurch gekennzeichnet, dass** das Netzknotenmaximum ($N_{max}$) durch die maximale Anzahl von Netzknoten (N) für die festgelegte Anzahl von Eingangs- und Ausgangsknoten eines nicht überbestimmten Netzes definiert ist.

5. Verfahren nach einem der vorhergehenden Ansprüche, **gekennzeichnet durch** Nicht-Linearisierung des **durch** die Parameter an den Eingangs- und Ausgangsknoten festgelegten Systems.

6. Verfahren nach einem der vorhergehenden Ansprüche, **dadurch gekennzeichnet, dass** das Trainieren des neuronalen Netzes mit einem Backpropagation-Verfahren erfolgt.

7. Computerprogrammprodukt mit Programmcodemitteln zur Durchführung des Verfahrens nach einem der vorhergehenden Ansprüche, wenn das Programm auf einem Computer ausgeführt wird.

8. Computerprogrammprodukt mit Programmcodemitteln nach Anspruch 7, die auf einem computerlesbaren Datenspeicher gespeichert sind.

Fig. 1

Fig. 2

c)

```
┌──┬──────────────────────────────┬──┐
│  │     Netzstruktur modifizieren │  │
└──┴──────────────────────────────┴──┘
                  ↓
        ┌──────────────────────┐
        │  Zufallsauswahl einer │
        │    Hidden-Schicht s   │
        └──────────────────────┘
                  ↓
        ┌──────────────────────┐
        │ Erweiterung der Schicht  s │
        │    um voll verknüpften │
        │       Netzknoten      │
        └──────────────────────┘
                  ↓
        ┌──────────────────────┐
        │ Zufällige Initialisierung │
        │  alles Synapsenwerte zu │
        │    diesem Netzknoten  │
        └──────────────────────┘
                  ↓
        ┌──────────────────────┐
        │   Weiches Einschalten │
        │    des Netzknotens    │
        └──────────────────────┘
                  ↓
            ( Ende )
```

d)

### Fig. 3

d)

```
┌──┬──────────────────────────────────────┬──┐
│  │   Weiches Einschalten des Neurons     │  │
└──┴──────────────────────────────────────┴──┘
                      ↓
            ┌──────────────────────┐
            │      e < 1 / 1000     │
            └──────────────────────┘
                      ↓
┌──────────────────────────────────────────────────┐
│ w(s,j,0) = - Summe(|w(s,j,k)|)[k,1,N(s-1)] − ln|1/e − 1| │
└──────────────────────────────────────────────────┘
                      ↓
                  ( Ende )
```

### Fig. 4

Fig. 5

$$\frac{1}{1+e^{-x}}$$

Fig. 6